**Europäisches Patentamt**

(19) **European Patent Office**

**Office européen des brevets**

(11) Veröffentlichungsnummer: **0 125 569**
**A2**

(12) **EUROPÄISCHE PATENTANMELDUNG**

(21) Anmeldenummer: **84104996.8**

(22) Anmeldetag: **03.05.84**

(51) Int. Cl.³: **B 62 B 3/10**

(30) Priorität: **11.05.83 DE 3317141**

(43) Veröffentlichungstag der Anmeldung:
**21.11.84 Patentblatt 84/47**

(84) Benannte Vertragsstaaten:
**AT BE CH FR GB IT LI NL SE**

(71) Anmelder: **Eisinger, Johann**
**Weidenweg 5**
**D-8076 Ebenhausen(DE)**

(71) Anmelder: **Lippert, Max**
**Beckerstrasse 6**
**D-8077 Baar(DE)**

(72) Erfinder: **Eisinger, Johann**
**Weidenweg 5**
**D-8076 Ebenhausen(DE)**

(72) Erfinder: **Lippert, Max**
**Beckerstrasse 6**
**D-8077 Baar(DE)**

(74) Vertreter: **Sasse, Volker, Dipl.-Ing.**
**Chiemgaustrasse 8a**
**D-8070 Ingolstadt/Do.(DE)**

(54) **Transportwagen.**

(57) Die Erfindung betrifft einen Transportwagen mit einem aus Metall bestehenden Wagengestell mit Rädern und mit wenigstens einem am Wagengestell befestigten, beladbaren Korb. Bei solchen bekannten Transportwagen sind die aus Metall bestehenden Körbe am Wagengestell festgeschweißt oder so festgeschraubt, daß sie vom normalen Benutzer nicht voneinander getrennt werden können. Durch den ganz Metallaufbau sind die bekannten Einkaufswagen schwer und teuer in der Herstellung. Dazu kommt, daß zur Oberflächenveredelung Metallteile der bekannten Transportwagen verchromt sind, so daß die Transportwagen alle gleich aussehen. Verschiedene Geschäfte oder Supermärkte, in denen solche Transportwagen gestellt werden, wünschen es jedoch, daß ihre Transportwagen sich deutlich von denen anderer Geschäfte unterscheiden. Erfindungsgemäß werden diese Nachteile dadurch vermieden, daß der Korb aus Kunststoff oder Leichtmetall in Leichtbauweise besteht und am Wagengestell abnehmbar befestigt ist. Speziell aus Kunststoff bestehende Körbe sind leicht und in der Einfärbung des Kunststoffes oder einem Oberflächendesign mit außerordentlich geringem Aufwand so herstellbar, daß sie für jeden Kunden anders aussehen. Für die Benutzer ist es komfortabel, wenn der Korb leicht vom Wagengestell abnehmbar ist.

Fig.1

Croydon Printing Company Ltd.

PATENTANWALT

## DIPL.-ING. VOLKER SASSE

EUROPEAN PATENT ATTORNEY

Chiemgaustraße 8 a
D 8070 INGOLSTADT

0125569

Telefon 08 41 / 8 27 90

26.04.1984
Li-2 eu
S/M

Patentanwalt Dipl.-Ing. V. Sasse, Chiemgaustraße 8 a, 8070 Ingolstadt

Anmelder: Johann Eisinger, Weidenweg 5, 8076 Ebenhausen
Max Lippert, Beckerstr. 6, 8077 Baar

- 1 -

## Transportwagen

Die Erfindung betrifft einen Transportwagen der im Oberbegriff des Patentanspruchs 1 angegebenen Art.

Bei den bekannten Transportwagen besteht der obere, große Einkaufskorb im allgemeinen aus Metall oder einem Drahtgeflecht, der am Wagengestell angeschweißt oder durch seinen Boden durchsetzende Befestigungsschrauben damit verbunden ist. Es ist auch ein Transportwagen mit einem metallischen Fahrgestell bekannt, auf dem ein Kunststoffkorb befestigt ist (DE-OS 27 27 310). Diese Kunststoffkörbe haben den Vorteil, weniger Beschädigungen an Ladenmöbeln zu verursachen als die Metallkörbe. Schwieriger ist jedoch ihre Befestigung auf dem metallischen Fahrgestell, da einerseits die größeren Flächen nicht die gleiche Steifigkeit wie Metallflächen aufweisen und zum anderen das Material selbst gewisse Nachgiebigkeit besitzt. Außerdem lassen sie sich nicht festschweißen oder -löten. Bei der bekannten Ausführung ist ein metallischer Rahmen vorgesehen, der in den oberen Korbrand als U-förmiger Bügel eingefügt ist. Zusätzlich wird der Kunststoff-Korb zwischen aufrecht stehenden Platten gehalten, über deren Endteile zusätzlich noch Ringe geschoben werden. Im beladenen Zustand kann sich die Korbbodenplatte durchbiegen, da sie nicht abgestützt wird, damit verjüngt sich die Korbbreite und rutscht an den seitlich haltenden aufrecht stehenden Platten des unteren

Bankkonten: Deutsche Bank Ingolstadt 23/51 310 BLZ 721 700 07
Postscheckkonto München 225 940-800 BLZ 700 100 70

Fahrgestells vorbei. Der Korb läßt sich nur bei absoluter Steifheit und Formgerechtigkeit auf dem Untergestell halten. Im gefüllten Zustand läßt er sich nicht herunternehmen.

Aus der US-PS 3 844 577 ist ferner ein Transportwagen bekannt, der einen Kunststoffkorb aufweist, welcher einfach auf ein metallisches Rohrrahmen-Fahrgestell aufgesetzt wird. Zu diesem Zweck ist ein nach unten offen ausgebildeter, quaderförmiger Raum notwendig, der zusammen mit dem die Waren aufnehmenden Raum den Korb jedoch als relativ schwierig zu fertigendes Teil erscheinen läßt. Bei einem beladenen Korb entsteht eine hohe Kraftkomponente, die auf die Steckverbindung zwischen Korb und Untergestell wirkt, weil der Korb sehr ausladend über das Gestell reicht. Die Verbindung ist dadurch recht instabil.

Der Erfindung liegt die Aufgabe zugrunde, einen Transportwagen der eingangs genannten Gattung zu erstellen, der in der Erstellung kostengünstig und leicht in der Handhabung ist, der vom Korb her leicht und trotzdem stabil und robust ist und mit dem die erstandenen Waren schnell und einfach in das Auto zu bringen sind.

Die gestellte Aufgabe wird erfindungsgemäß durch die im kennzeichnenden Teil des Hauptanspruchs angegebenen Merkmale gelöst.

Der leichte Kunststoffkorb wird durch diese Ausbildung besonders tragfähig und formstabil. Insbesondere der großflächige Boden benötigt keine Versteifungsrippen oder andere aufwendige Maßnahmen, um ohne Deformationen das Ladegut zu halten. Der Korb kann somit leicht und grazil ausgebildet sein. Für den Benutzer ist der Transportwagen sehr komfortabel, da er den beladenen Korb mühelos vom Wagenteil lösen und abnehmen kann und den beladenen Korb in seinen Wagen stellt und ggfs. dem Besitzer später zurückgibt. Auch bei Reparaturen oder Beschädigungen des Wagens ist der Korb vom Untergestell sehr schnell entfernt und durch ein anderes Teil ausgetauscht. Die form- und/oder kraftschlüssige Verbindung läßt das Gestell und den Korb zu einer Einheit werden.

Nicht zuletzt besteht auch darin der große Vorteil, den Korb des Transportwagens in seiner Farbgebung auf einen jeweiligen Geschäftsbetrieb individuell abzustellen, so daß für die einzelnen Geschäfte individuelle und unterscheidungsfähige Transportwagen erstellt werden bei einer rationellen gleichmäßigen Fertigung des Untergestells und lediglich verschiedenen Farbstoff bei der Korberstellung.

Die Verbindung zwischen Korb und Wagengestell ist besonders vorteilhaft gemäß Anspruch 2 ausgebildet. Somit läßt sich der Korb im beladenen Zustand in einfacher Weise vom Wagengestell abnehmen.

Eine vorteilhafte Ausführungsform des Transportwagens geht aus Anspruch 3 hervor. Auch bei einseitiger oder überstarker Beladung des Korbes wird damit seine Beschädigung oder ein Abkippen verhindert, da der Träger die Belastung gut an das Wagengestell weiterleitet.

Das Anbringen und Abnehmen des Korbes läßt sich dann besonders gut ausführen, wenn die Maßnahmen von Anspruch 4 gegeben sind. Zudem wird der Korb auf dem Träger mit der schwertartigen Ausbildung sehr sicher abgestützt.

Alternativ dazu ist auch eine Ausführungsform denkbar, wie sie Anspruch 5 erläutert. Die Zinken stützen den Korb über den größten Teil seiner Längserstreckung und möglichst weit außen, so daß auch bei einseitiger Belastung des Korbes keine übermäßigen Belastungszonen im Korbboden entstehen.

Eine weitere, vorteilhafte Ausführungsform eines Transportwagens ist durch Anspruch 6 angegeben. Da der Korb bei dieser Ausbildung nicht wie bei den bekannten Einkaufswagen die Gestaltfestigkeit des gesamten Einkaufswagens erhöht, ist es wichtig, daß das Wagengestell für sich bereits sehr tragfähig und gestaltfest ist, wofür die Querstreben mitverantwortlich sind, von denen ggfs. die obenliegende Querstrebe eine Zweitfunktion erfüllt, wenn sie zur Verankerung des Korbes dient oder beiträgt.

Vorteilhaft sind auch die Merkmale von Anspruch 7, da der Benutzer nach Lösen der Klammern oder Haken den Korb leicht vom Wagengestell abnehmen kann, während beim Fahren des Transportwagens oder bei den bei der Benutzung auftretenden Belastungen die Gefahr vermieden wird, daß der Korb sich ungewollt vom Wagengestell lösen kann.

Alternativ dazu ist auch eine Ausführungsform denkbar, wie sie Anspruch 8 erläutert. Zum Lösen des Korbes ist eine Bewegung nach oben erforderlich, die bei der normalen Benutzung, z.B. beim Fahren, nicht vorkommt.

Eine zusätzliche Sicherung des festgelegten Korbes läßt sich auch gemäß Anspruch 9 erreichen. Der Benutzer ist gezwungen, zum Abnehmen des Korbes zuerst das Riegelelement zu lösen. Diese Maßnahme bietet dem Transportwagen eine sehr feste und stabile Einheit.

Schließlich sind auch die Merkmale von Anspruch 10 wichtig, da sie formtechnisch einfache Verbindungsmöglichkeiten zwischen dem Korb und dem Wagengestell erläutern.

Nachstehend werden anhand der Zeichnungen Ausführungsformen der Erfindung erläutert.

Es zeigen

Fig. 1    eine Seitenansicht eines Transportwagens,

Fig. 2    eine perspektivische Ansicht einer abgeänderten Ausführungsform eines oberen Korbes für den Transportwagen von Fig. 1,

Fig. 3    eine Draufsicht auf einen Teil des Wagengestells des Transportwagens von Fig. 1,

Fig. 4    einen Schnitt in der Ebene IV-IV von Fig. 3,

Fig. 5a, 5b    zwei einander zugeordnete Ansichten eines Details aus Fig. 3,

Fig. 6    einen Teil einer Seitenansicht einer weiteren Ausführungsform eines Transportwagens,

Fig. 7   eine Seitenansicht, teilweise im Schnitt, einer weiteren Ausführungsform,

Fig. 8   eine Seitenansicht einer weiteren Ausführungsform und

Fig. 9   einen Teil einer Seitenansicht einer weiteren Ausführungsform.

Ein Transportwagen 1, wie er in Selbstbedienungsgeschäften, Supermärkten, Großmärkten, bei Friedhöfen oder dgl. üblich ist, besteht aus einem aus Metall hergestellten Wagengestell 2, auf dem ein oberer Korb 3 lösbar befestigt ist, sowie aus einem im Wagengestell 2 unten angeordneten Zusatzkorb 4.

Das Wagengestell 2 besteht aus einem vorne offenen Rahmen 5, an dem Laufräder 6 befestigt sind, sowie aus mindestens einer, vorzugsweise zwei in Querrichtung des Wagengestells nebeneinanderliegenden, hochstehenden Wangen 7, die zweckmäßigerweise über Querstreben 8 miteinander verbunden sind. Auf den Wangen 7 ist oben ein Träger 9 für den Korb 3 befestigt, der sich schräg nach oben und nach vorne erstreckt.

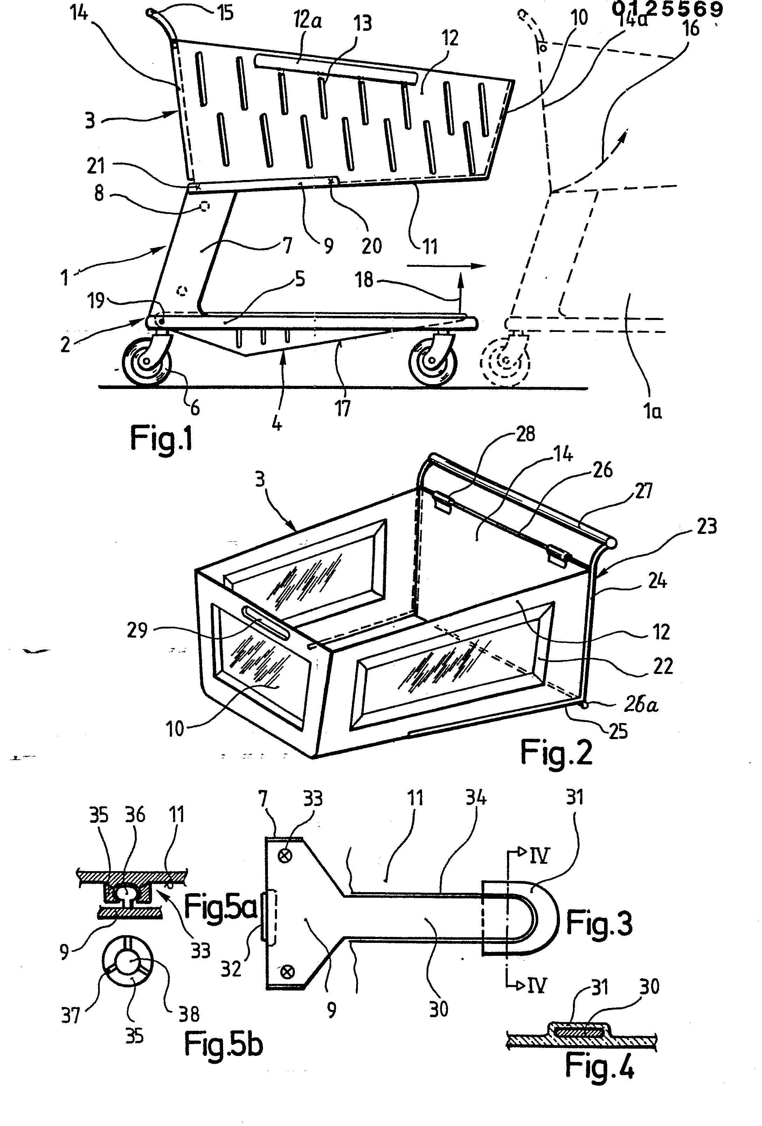

Auf dem Träger 9 ist mit Befestigungselementen 20 und 21 der Korb 3 abnehmbar befestigt. Der Korb 3 besteht (siehe Fig. 2) aus Kunststoff oder aus Leichtmetall in Leichtbauweise und besitzt eine schräge Vorderseite 10, annähernd vertikale Seiten 12 und eine Hinterseite, die von einer schwenkbaren Klappe 14 gebildet wird. In einer Seitenansicht ist der Korb annähernd keilförmig. Da das Wagengestell 2 offen und der Korb 3 keilförmig ist, können mehrere Transportwagen 1 bei Nichtbenutzung ineinandergeschoben werden, wie dies anhand der strichlierten Darstellung eines vor dem Transportwagen 1 stehenden, gleichartigen Transportwagen 1a verdeutlicht ist. Wenn der Transportwagen 1 von hinten in den Transportwagen 1a geschoben wird, drückt der Korb 3 mit seiner Vorderseite 10 die Klappe 14a in Richtung eines Pfeiles 16 auf, so daß der Korb 3a vollständig eingeschoben wird und das Wagengestell 2 von hinten in das Wagengestell des davorstehenden Transportwagens 1a einfährt.

Im Rahmen 5 des Wagengestells 2 von Fig. 1 ist ein Zusatzkorb mit geringer Tiefe um eine Achse 19 im hinteren Bereich in Richtung eines Pfeiles 18 hochschwenkbar und abnehmbar gelagert, wobei der Zusatzkorb 4 zweckmäßigerweise mit einer schrägen Unterseite 17 ausgestattet ist, die beim Einfahren in den davorstehenden Transportwagen 1a den Zusatzkorb 4 selbsttätig hochschwenken läßt.

Der Boden des Korbes 3 ist mit 11 bezeichnet. Die Seiten 12 können zum Zweck eines besseren Einblicks und aus Gewichtsgründen mit Durchbrechungen 13 versehen sein. Oberhalb der Klappe 14 ist ein Bügel 15 zur Handhabung des Transportwagens vorgesehen, an dem der Benutzer angreift, wenn er den Transportwagen schiebt.

Bei der Ausführungsform des Korbes 3 von Fig. 2 sind die einzelnen Flächen des Korbes 3 vollflächig ausgebildet und ggfs. mit die Steifigkeit erhöhenden Eindrückungen 22 versehen. Die vollflächigen Bereiche können auch nur auf einen oberen Seitenwandbereich 12a des Korbes 3 beschränkt bleiben, womit ausreichende Aufnahmefläche für Werbeschrift gegeben ist und andererseits zusätzliche Versteifung hervorgerufen wird. Die Seiten des Korbes 3 können in einer charakteristischen Farbe eingefärbt sein. Ferner könnten die Seiten mit werbenden Aufdrucken oder dem Namen des Besitzers versehen sein. Bei dieser Ausführungsform des Korbes 3 gemäß Fig. 2 ist im Korb 3 eine metallische Armierung 23 in Form eines Rahmens eingegliedert, die eine Querstrebe 26 sowie sich von den Vertikalstreben 24 nach vorne und entlang der Kanten des Korbes 3 erstreckende Längsstreben 25 besitzt. Diese rahmenartige Armierung 23 könnte sich zusätzlich als Querstrebe 26a am unteren Korbrand herumerstrecken. Die Armierung 23 ist zweckmäßigerweise in den Korb 3 eingeformt. An der Querstrebe 26 ist mit Klips-Scharnieren die Klappe 14 nicht nur schwenkbar, sondern auch vollständig abnehmbar angehängt. Der Haltebügel 27 kann entweder in die Armierung 23 eingegliedert oder an dieser befestigt sein. In der Vorderseite 10 des Korbes 3 ist eine Grifföffnung 29 ausgespart, die es dem Benutzer ermöglicht, nach dem Lösen der Verbindung des Korbes 3 mit dem Wagengestell 2 den beladenen Korb 3 abzuheben und zu tragen.

Fig. 3 zeigt in einer Draufsicht auf das Wagengestell 9, z.B. von Fig. 1, daß der Träger 9 die beiden Wangen 7 miteinander verbindet und eine schwertartige Verlängerung 30 besitzt, die sich in Längsrichtung des Korbes erstreckt und mit ihrem freien Ende in einer Tasche 31 im Boden 11 des Korbes eingesteckt ist. Zum endgültigen Festlegen des Korbes 3 kann dieser nahe seiner hinteren unteren Kante einen klammerartigen Bügel 32 besitzen, der hinter das Ende des Trägers 9 greift oder an der Querstrebe 8 zwischen den Wangen 7 zum Angriff bringbar ist. Anstelle des Verschlusses 32 könnten auch druckknopfartige oder bajonettverschlußartige Verbindungselemente 33 vorgesehen sein, die der Benutzer auch bei beladenem Korb 3 lösen kann, wenn er den Korb 3 vom Wagengestell 2 abnehmen möchte.

In Fig. 4 ist erkennbar, wie im Boden 11, der eben ausgebildet ist, um das Einschieben in einen anderen Transportwagen zu erleichtern, die Tasche 31 so ausgebildet ist, daß das Ende der schwertartigen Verlängerung 30 sicher gehalten wird. Dazu ist es erforderlich, daß im Boden 11 eine längsverlaufende Nut 34 für die Verlängerung 30 eingeformt ist, welche nicht nur für eine glatte Unterseite sorgt, sondern auch eine besonders gute Lagesicherung gegen ein seitliches Verrutschen des Korbes 3 auf dem Wagengestell 2 sorgt.

An sich würden auch Haken an der Unterseite des Bodens 11 reichen, die die Verlängerung 30 seitlich umgreifen, wenn die Verbindungselemente 33 eine relative Verschiebung zwischen dem Korb 3 und dem Wagengestell 2 ohnedies verhindern.

Die Fig. 5a und 5b verdeutlichen eine Ausführungsform der Verbindungselemente 33, wobei auf dem Träger 9 hochstehende Zapfen 36 mit verdicktem Ende angeformt sind, die in entsprechende Pfannen 35, 38 eindrückbar sind, die am Boden 11 ausgeformt sind. Zweckmäßigerweise sind die Pfannen 35 mit in Umfangsrichtung verteilten Schlitzen 37 versehen, so daß die naturgegebene Elastizität des Kunststoffes für einen ausreichend festen Sitz des Korbes 3 auf dem Wagengestell 2 sorgt. Zum Abnehmen des Korbes 3 gemäß den Fig. 3, 4 und 5a, 5b braucht der Benutzer den Korb 3 nur soweit anzuheben, bis die Verbindungselemente 33 gelöst sind, ehe er den Korb 3 nach vorne schiebt, bis die schwertartige Verlängerung aus der Tasche 31 austritt.

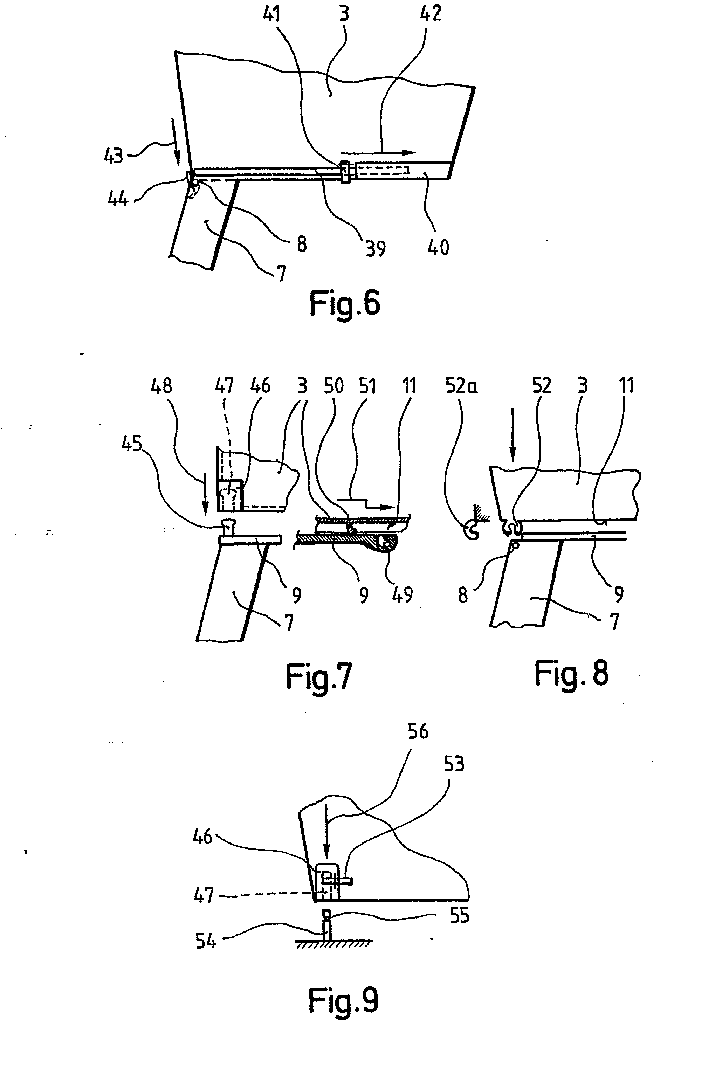

Bei einer weiteren Ausführungsform gemäß Fig. 6 sind an den seitlichen Wangen 7 des Wagengestelles 2 zwei nach vorne ragende Zinken 39 aus Metall befestigt, die in entsprechende, taschenförmige Aufnahmen im Bereich des Bodens des Korbes 3 einsteckbar sind. Zweckmäßigerweise sind die Kantenbereiche des Korbes so ausgespart, daß die Zinken 39 innerhalb der Außenkontur des Korbes zu liegen kommen, wenn sie in Richtung eines Pfeiles 42 in die Aufnahmen 40 eingesteckt werden. Sie wirken zusätzlich wie eine Armierung und bieten dem Korb Versteifung. Am Korb 3 klapp- oder schwenkbar befestigte Klammern 41 können seitlich über die Zinken 39 geklappt werden, um den Korb 3 gegen ein unbeabsichtigtes Abziehen zu sichern, wobei diese Klammern 41 auch in entsprechende Einbuchtungen in den Zinken 39 eingreifen können. Anstelle der Klammern 41 könnten auch an der Rückseite des Korbes 3 federnde Klammern 44 vorgesehen sein, die bei einem Druck in Richtung eines Pfeiles 43 über den Querstag 8 rasten und den Korb auf diese Weise festlegen.

Bei einer weiteren Ausführungsform gemäß Fig. 7 sind am Träger 9 oberseitig hochstehende Zapfen 45 mit einem verdickten Ende vorgesehen, während im vorne liegenden Bereich des Trägers 9 eine hinterschnittene Ausnehmung 49 vorgesehen ist. Am Boden 11 des Korbes 3 ist im vorderen Bereich eine hakenartige Rippe 50 oder ein hakenartiger Vorsprung angeformt, der in die Ausnehmung 49 einsetzbar ist und sich darin verhakt. Dazu muß der Korb in Richtung eines Pfeiles 51 auf dem Träger nach vorne geschoben werden, bis der Haken 50 in die Ausnehmung 49 eintritt. Die Zapfen 45 sind dann auf Vertiefungen 47 ausgerichtet, die in seitlichen Ansätzen 46 am Korb 3 ausgebildet sind. Wenn dann das hintere Ende des Korbes in Richtung eines Pfeiles 48 nach unten auf den Träger 9 gedrückt wird, treten die Zapfen 45 in die Vertiefungen 47 ein und legen, zweckmäßigerweise unter Verrasten, den Korb so fest, daß er beim normalen Fahren nicht gelöst werden kann.

Bei einer weiteren Ausführungsform gemäß Fig. 8 ist am rückwärtigen Ende des Bodens 11 des Korbes 3 eine Rippe mit einer Nut angeformt, deren Öffnungsweite geringfügig kleiner ist, als der Außendurchmesser der Querstrebe 8 zwischen den Wangen 7. Beim Aufsetzen des Korbes 3 auf den Träger 9 schnappt die Klammerrippe 52 über den Quersteg 8 und hält den Korb fest.

Wenn der Korb 3 gemäß den Fig. 3 oder 6 mit dem vorderen Ende des Trägers oder den Zinken durch eine Schiebebewegung in Richtung des Pfeiles 42 verbunden wird, genügt es auch, anstelle der Klammerrippe 52 eine einseitige Klammerrippe 52a mit einer hinterschnittenen Nut vorzusehen, die am Ende der Einschiebebewegung der Gabelzinken 39 oder der schwertartigen Verlängerung 30 durch einen Druck nach unten über die Querstrebe 8 rastet.

Fig. 9 zeigt eine weitere Ausführungsform, bei der zusätzlich zu einem kraftschlüssigen Sitz ein Formschluß vorgesehen ist. Zu diesem Zweck ist auf dem Träger ein Zapfen 54 mit kreisförmigen Hinterschnitt 55 vorgesehen, der auf eine, z.B. zylindrische Vertiefung 47 in einer Verdickung 46 des Korbes ausgerichtet ist. Im Bereich der Vertiefung 47 ist in der Verdickung 46 ein von außen ergreifbares Riegelelement 53 schwenkbar gelagert, das sich in den Hinterschnitt 55 des Zapfens 54 einbringen läßt, wenn diese vollständig in die Ausnehmung 47 eingetreten ist. Dazu ist es erforderlich, zuvor den Korb in Richtung eines Pfeiles 56 nach unten zu drücken, damit der Hinterschnitt 55 auf das Riegelelement 53 ausgerichtet ist.

- 1 -

Patentansprüche:

1. Transportwagen für Selbstbedienungsläden oder dgl. mit einem Räder aufweisenden Metallgestell, das zwei im Abstand voneinander vorgesehene, hochstehende hintere Wangen aufweist, die als Tragteil für einen abnehmbar aufgesetzten Kunststoffkorb dienen, in den im hinteren Ende eine rahmenartige metallische Armierung eingegliedert ist, von der sich Stäbe über den oberen Korbrand erstrecken und mit einem zwischengesetzten Rohr eine Bedienungsstange bilden, dadurch gekennzeichnet, daß die den Korb (3) tragenden Teile des Wagengestells (2) bei festgelegtem Korb (3) als Versteifungsteile für den Korbboden (11) dienen, wobei der Korb (3) über kraftschlüssige und/oder formschlüssige Verbindungselemente (20, 21, 41) lösbar mit dem Wagengestell (2) verbunden ist.

2. Transportwagen nach Anspruch 1, dadurch gekennzeichnet, daß die Verbindungselemente (20, 21, 41) außerhalb des Korbes (3) zugänglich angeordnet sind.

3. Transportwagen nach Anspruch 1, dadurch gekennzeichnet daß auf den Wangen (7) als den Korb (3) tragender Teil ein vorzugsweise plattenförmiger, metallischer Träger (9) horizontal liegend befestigt ist, der sich in Längsrichtung des Korbes (3) unter dem Korbboden (11) erstreckt.

4. Transportwagen nach Anspruch 3, dadurch gekennzeichnet, daß der Träger (9) schwertartig verlängert (bei 30) und mit dem Schwertende in einer im Korbboden (11) ausgebildeten und zum hinteren Korbende hin offenen Tasche (31) einsteckbar ist.

5. Transportwagen nach Anspruch 1, dadurch gekennzeichnet, daß an den Wangen (7) in Längsrichtung vorstehende Zinken (39) befestigt sind, die in ausgesparten Aufnahmen (40) des Korbes (3) im unteren Korbkantenbereich einsteckbar sind.

6. *Transportwagen nach Anspruch 1, dadurch gekennzeichnet,* daß die Wangen (7) durch Querstreben (8) miteinander verbunden sind, von denen ggfs. die obenliegende zur Verankerung des Korbes (3) dient.

7. *Transportwagen nach einem der vorhergehenden Ansprüche, dadurch gekennzeichnet,* daß am Korb (3) als Verbindungselement (20, 21, 41) schwenkbare Klammern oder Haken vorgesehen sind, mit denen der Korb (3) am Träger (9) oder an den Zinken (39) verriegelbar ist.

8. *Transportwagen nach Anspruch 4, dadurch gekennzeichnet,* daß auf der Oberseite des Trägers (9) wenigstens ein Zapfen (36, 45, 54) vorzugsweise mit verdicktem Ende vorgesehen ist, der beim Aufsetzen des Korbes (3) in einer am Korbboden (11) ausgebildeten Pfanne (35, 38, 47) oder Vertiefung eindrückbar bzw. einrastbar ist.

9. *Transportwagen nach Anspruch 8, dadurch gekennzeichnet,* daß der Zapfen (54) durch ein von außen betätigbares Riegelelement (53) am Korb (3) gegen ein Herausziehen gesichert ist.

10. *Transportwagen nach wenigstens einem der vorhergehenden Ansprüche, dadurch gekennzeichnet,* daß am Boden (11) des Korbes (3) Rasthaken, Klammerrippen, Druckknöpfe oder dgl. angeformt sind, die an entsprechenden Gegenelementen oder in Aufnahmestellen des Trägers (9) oder an der Querstrebe (8) zwischen den Wangen (7) zum Eingriff bringbar sind.

**Fig.1**

**Fig.2**

**Fig.3**

**Fig.4**

**Fig.5a**

**Fig.5b**

0125569

0125569

**Fig.6**

**Fig.7**

**Fig. 8**

**Fig.9**